# EUROPEAN PATENT APPLICATION

(11) **EP 4 799 757 A1**
(43) Date of publication of application: **02.09.2026**
(21) Application number: 24912132.8
(22) Date of filing: 22.11.2024
(51) Int. Cl.: B23Q 3/157

(54) **TOOL CONVEYANCE DEVICE AND PROCESSING SYSTEM**

(30) Priority: 26.12.2023 JP 2023219454
(71) Applicant: DMG Mori Co., Ltd., Yamatokoriyama-shi, Nara 639-1160 (JP)
(72) Inventor: DOI Takafumi, Yamatokoriyama-shi, Nara 639-1160 (JP)
(74) Representative: Isarpatent
(86) International application number: PCT/JP2024/041495
(87) International publication number: WO 2025/142239

(57) **Abstract**

The tool conveying device (1) includes a tool stocker (11) provided adjacent to the machining machine 2 and configured to store a plurality of tools (T) in a state in which the tools are placed and arranged side by side, a first tool conveying mechanism (12) configured to move a tool to a plurality of stock positions (P2) at which respective tools (T) stored in the tool stocker (11) are placed and to a conveyance standby position (P3) at which a tool (T) to be attached to or detached from the spindle (22) is placed, and a second tool conveying mechanism (13) configured to move a tool to the conveyance standby position (P3) and to a tool exchange position (P4), which is offset in a horizontal direction with respect to the conveyance standby position (P3) and at which the tool is delivered to the spindle (22). The second tool conveying mechanism (13) is configured to convey the tool between the conveyance standby position (P3) and the tool exchange position (P4) via a conveyance chamber (28) formed in the machining machine.

## Description

### Technical Field

The present invention relates to a tool conveying device.

### Background Art

Long tools, which are longer than general tools, are known as tools used in machining machines. Long tools often do not fit in a tool magazine provided on the machining machine. Therefore, when long tools are used, a long tool stocker that stores the long tools separately from the tool magazine is provided on the machining machine. Long tools stored in the long tool stocker are delivered to a spindle or the like in a machining chamber by a tool conveying device. Such a tool conveying device is disclosed, for example, in Patent Literature 1.

The tool conveying device of Patent Literature 1 includes a plurality of holding members each holding a long tool and serving as a long tool stocker, and a plurality of air cylinders provided corresponding to the holding members, each moving the long tool in a longitudinal direction thereof. The air cylinders move the long tools together with the holding members to a tool exchange position. The spindle in the machining chamber comes to receive the long tool, whereby the long tool at the tool exchange position is chucked by the spindle.

### Citation List

### Patent Literature

Patent Literature 1: Japanese Unexamined Patent Publication No. 2017-193033

### Summary of Invention

### Technical Problem

The tool conveying device of Patent Literature 1 is provided in a space portion, such as around a spindle that chucks a workpiece, in the machining machine. Along with this, a long tool stocker that stores long tools is also provided in a space portion such as around the spindle, that is, inside the machining machine. Therefore, the number of long tools that can be stored is reduced due to the size of the machining machine. In addition, in order to deliver a tool to a spindle of the machining machine, an air cylinder, that is, a tool conveying mechanism, is provided for each of a plurality of holding members. Even though the tool is simply conveyed in a single-axis direction, the structure of the tool conveying device is complex and the number of components is large.

The present invention aims to facilitate an increase in the number of long tools that can be stored and to convey long tools with a simple structure.

### Solution to Problem

(1) A tool conveying device of the present invention is
   a tool conveying device used in a machining machine, the machining machine including: a machining chamber for machining a workpiece; and a spindle provided in the machining chamber and configured to detachably hold a tool,
   the tool conveying device including:
      a tool stocker provided adjacent to the machining machine and configured to store a plurality of tools in a state in which the tools are placed and arranged side by side;
      a first tool conveying mechanism configured to move a tool to a plurality of stock positions at which tools stored in the tool stocker are respectively placed and to a conveyance standby position at which a tool to be attached to or detached from the spindle is placed; and
      a second tool conveying mechanism configured to move a tool to the conveyance standby position and to a tool exchange position that is offset in a horizontal direction with respect to the conveyance standby position and at which the tool is delivered to the spindle,
      wherein the second tool conveying mechanism is configured to convey a tool between the conveyance standby position and the tool exchange position via a conveyance chamber formed in the machining machine.
   In the above-described tool conveying device, a tool stocker that stores tools is provided separately from the machining machine, that is, outside the machining machine. In the tool stocker provided outside the machining machine, a space for storing tools can be more easily made larger than in a tool stocker provided inside the machining machine. The tool stocker provided outside the machining machine can store more tools of various sizes and shapes. In particular, this configuration is effective when the tool is a long tool that cannot be stored in a tool magazine in the machining machine. In the above tool conveying device, the first tool conveying mechanism delivers various tools stored in the tool stocker to the second tool conveying mechanism. The second tool conveying mechanism delivers a tool to a spindle of the machining machine. In other words, a conveying mechanism that delivers a tool to a spindle of the machining machine is consolidated into a single conveying mechanism, the second tool conveying mechanism. Therefore, it is not necessary to provide a tool conveying mechanism for each of a plurality of tools in order to deliver a tool to a spindle of the machining machine. Therefore, according to the above tool conveying device, it is possible to convey long tools with a simple structure while increasing the number of long tools that can be stored.
(2) In the tool conveying device of (1),
   the tool stocker
   may store the plurality of tools arranged side by side in a direction orthogonal to a longitudinal direction thereof.
(3) In the tool conveying device of (1),
   the tool stocker
   may store the plurality of tools arranged in the front-rear direction of the machining machine such that a longitudinal direction of each of the tools is parallel to a left-right direction of the machining machine.
(4) In the tool conveying device of (1),
   the first tool conveying mechanism
   may move a tool to the plurality of stock positions and to the conveyance standby position that is offset from each of the plurality of stock positions in a direction in which tools stored in the tool stocker are arranged.
(5) In the tool conveying device of (1),
   the first tool conveying mechanism
   may move a tool to the plurality of stock positions and to the conveyance standby position that is offset from each of the plurality of stock positions in a front-rear direction of the machining machine.
   According to the tool conveying device of (2) to (5), a storage space in the tool stocker can be used more efficiently than in a configuration in which a plurality of tools are arranged in a longitudinal direction thereof.
(6) In the tool conveying device of (1),
   the second tool conveying mechanism
   may move a tool to the conveyance standby position and to the tool exchange position that is offset from the conveyance standby position in a longitudinal direction of a tool stored in the tool stocker.
(7) In the tool conveying device of (1),
   the second tool conveying mechanism
   may move a tool to the conveyance standby position and to the tool exchange position that is offset from the conveyance standby position in a left-right direction of the machining machine.
   Generally, in a machining machine, a device or the like for operating a spindle is arranged behind a machining chamber (rear side), and a door for loading and unloading a workpiece is provided in front of the machining chamber (front side). Further, a lower side of the machining chamber is close to a floor of a factory or the like. There may be a space above the machining chamber; however, when a tool is inserted from above the machining chamber, the tool conveying device becomes larger in an up-down direction. On the other hand, in the tool conveying device of (6) and (7), a tool is conveyed from the tool stocker to the machining machine using a space in a left-right direction of the machining machine. In other words, the above-described tool conveying device can be easily applied not only to dedicated machining machines but also to general-purpose machining machines.
(8) In the tool conveying device of (1),
   a direction in which the first tool conveying mechanism moves a tool may intersect a direction in which the second tool conveying mechanism moves a tool.
   If a direction in which the first tool conveying mechanism moves a tool is the same as a direction in which the second tool conveying mechanism moves a tool, the tool conveying device tends to become large in that direction. On the other hand, in the tool conveying device of (8), a direction in which the first tool conveying mechanism moves a tool is different from a direction in which the second tool conveying mechanism moves a tool. Therefore, according to this tool conveying device, enlargement of the tool conveying device is suppressed. Preferably, in a top view, a direction in which the first tool conveying mechanism moves a tool intersects a direction in which the second tool conveying mechanism moves a tool. More preferably, in a top view, a direction in which the first tool conveying mechanism moves a tool is orthogonal to a direction in which the second tool conveying mechanism moves a tool.
(9) In the tool conveying device of (1),
   the first tool conveying mechanism and the second tool conveying mechanism may be provided at positions lower than a ceiling of the machining machine.
   For example, consider a case where a tool is inserted into a conveyance chamber in the machining machine from above. In this case, it is necessary for the tool conveying device to move a tool stored in the tool stocker to a position higher than a ceiling of the machining machine. An example of such a conveying method is conveying a tool using a gantry loader. In this case, it is necessary to provide a guide rail on the machining machine, and the tool conveying device tends to become larger in an up-down direction. On the other hand, in the above-described tool conveying device of (9), the first and second tool conveying mechanisms that convey a tool are provided at positions lower than a ceiling of the machining machine. Therefore, according to this tool conveying device, it is possible to suppress enlargement of the tool conveying device in an up-down direction.
(10) In the tool conveying device of (1),
   the tool conveying device may further include:
   a plurality of bases on which the plurality of tools are respectively placed; and
   a lock mechanism that detachably connects each of the plurality of bases and the first tool conveying mechanism.
   In the above-described tool conveying device of (10), the first tool conveying mechanism does not directly grip a tool. The first tool conveying mechanism moves a tool by moving a base. The first tool conveying mechanism and a base are detachably connected by a lock mechanism. Therefore, regardless of the size or shape of a tool, a shape of a target delivered by the first tool conveying mechanism and the second tool conveying mechanism can be unified, facilitating simplification of each tool conveying mechanism.
(11) In the tool conveying device of (1),
   the tool conveying device may further include
   a plurality of bases on which the plurality of tools are respectively placed,
   and the first tool conveying mechanism
   may be connected to the base from a side where a tool is placed on the base and may move the tool by moving the base.
   If this is the case, adjacent bases can be arranged in the tool stocker in an adjacent manner. Therefore, according to this tool conveying device, the number of tools that can be stored in the tool stocker can be increased. In other words, when the first tool conveying mechanism conveys a base by gripping both side surfaces of the base with a hand having a pair of claw portions, it is necessary to form a gap between bases for insertion of the claw portions, and stock positions have to be set such that an installation interval is formed between the bases. In contrast, in the above-described tool conveying device of (11), since a tool placement side of the base is connected to the first tool conveying mechanism, it is unnecessary to provide such a gap, and a space in the tool stocker can be utilized to a maximum extent.
(12) In the tool conveying device of (1),
   the tool conveying device may further include
   a plurality of bases on which the plurality of tools are respectively placed, and
   the second tool conveying mechanism
   may be connected to the base from a side opposite to a side where a tool is placed on the base and may move the tool by moving the base.
   In the tool conveying device of (12), the second tool conveying mechanism is connected to a base from below. Therefore, a conveying mechanism such as a conveyor can be applied as the second tool conveying mechanism. The second tool conveying mechanism does not need to include a lifting mechanism or the like that moves a tool in an up-down direction. Therefore, according to this tool conveying device, it is possible to suppress enlargement of the tool conveying device in an up-down direction.
(13) In the tool conveying device of (1),
   the first tool conveying mechanism
   may move a tool to a set position at which the tool is loaded into and unloaded from the tool stocker, in addition to the stock positions and the conveyance standby position.
   For example, when the tool stocker does not have a function of taking a tool in and out from an exterior, a tool to be stored in the tool stocker is first mounted on a spindle of a machining machine. The tool conveying mechanism then conveys a tool received from the spindle to the tool stocker. On the other hand, in the above-described tool conveying device of (13), a tool can be loaded into and unloaded from the tool stocker without going through a spindle. Therefore, according to this tool conveying device, a task of storing a tool in the tool stocker is facilitated.
(14) In the above-described tool conveying device of (1),
   the machining machine
   may include a first fixing portion configured to fix the first tool conveying mechanism, and
   a second fixing portion configured to fix the second tool conveying mechanism, and
   the machining machine, the first tool conveying mechanism, and the second tool conveying mechanism may be configured to be separable from the tool stocker by fixing the first tool conveying mechanism and the second tool conveying mechanism to the machining machine with the first fixing portion and the second fixing portion.
   At a tool exchange position, a position of the second tool conveying mechanism relative to the machining machine is important in order to automatically deliver a tool between the second tool conveying mechanism and a spindle of the machining machine. Suppose that the second tool conveying mechanism is fixed to the tool stocker. In this case, when assembling the tool conveying mechanism, a positioning operation for causing the machining machine to recognize the tool exchange position is required. Similarly, suppose that the first tool conveying mechanism is fixed to the machining machine and the second tool conveying mechanism is fixed to the tool stocker. In this case, a positioning operation for causing the first tool conveying mechanism to recognize a conveyance standby position is required. In the above-described tool conveying device of (14), both the first tool conveying mechanism and the second tool conveying mechanism are fixed to the machining machine. Therefore, for example, if the machining machine is shipped with the first tool conveying mechanism and the second tool conveying mechanism attached, it is not necessary to perform the above-mentioned positioning operation when assembling the tool conveying device at a delivery destination. Therefore, according to this tool conveying device, assembly work of the tool conveying device can be facilitated.
(15) In the above-described tool conveying device of (1),
   the tool stocker
   may be provided adjacent to a side surface of the machining machine, and
   when the machining machine is bisected into upper and lower portions at a middle of a height thereof, in a side view, an area in which the tool stocker overlaps the upper portion of the machining machine may be larger than an area in which the tool stocker overlaps the lower portion of the machining machine.
(16) In the above-described tool conveying device of (1),
   the tool stocker may include:
   a tool housing configured to store the plurality of tools; and
   support legs configured to support the tool housing, and
   the support legs
   may be configured to form a space under the tool housing.
(17) In the above-described tool conveying device of (16),
   the machining machine may further include
   a machining scrap conveying device configured to convey machining scrap generated by machining the workpiece, and
   the machining scrap conveying device
   may include a discharge portion provided in a space under the tool housing and configured to discharge the machining scrap from the machining machine.
   Generally, an outlet of a machining scrap conveying device, a machining scrap bucket, or the like are often provided beside a lower portion of a machining machine. In the tool conveying device of (15) to (17), the tool stocker is provided adjacent to an upper portion of the machining machine. In other words, a tool is stored using a space positioned above a discharge portion of the machining scrap conveying device. Therefore, for example, it is easy to expand the tool stocker in a front-rear direction. Therefore, according to this tool conveying device, the number of tools that can be stored in the tool stocker can be increased.
(18) In the above-described tool conveying device of (1),
   the plurality of stock positions
   may be arranged in the front-rear direction of the machining machine,
   and a distance in the front-rear direction between a frontmost stock position and a rearmost stock position may be longer than a distance in a front-rear direction of the machining chamber.
(19) In the above-described tool conveying device of (1),
   the plurality of stock positions
   may be arranged in the front-rear direction of the machining machine,
   and the conveyance standby position
   may be provided forward of at least one stock position and rearward of at least one stock position.
   The tool conveyed by the second tool conveying mechanism is delivered to a spindle of the machining machine. Behind a spindle in a machining chamber in the machining machine, various devices such as devices that operate the spindle are arranged. To accommodate these devices, the machining machine protrudes rearward beyond a position of the spindle (a position at which the spindle is positioned most rearward). Suppose that a conveyance standby position at which a tool is delivered between a spindle and the second tool conveying mechanism is provided behind all stock positions. In this case, all tools are stored in front of the conveyance standby position, that is, in front of the second tool conveying mechanism. This means that a stock position is not provided beside a portion that protrudes rearward beyond the second tool conveying mechanism in the machining machine. On the other hand, in the above-described tool conveying device of (18) and (19), at least one stock position is provided in front of and behind the conveyance standby position. In this configuration, a space beside a portion that protrudes rearward beyond the second tool conveying mechanism in the machining machine can also be effectively utilized. In other words, in the above-described tool conveying device, a tool is stored in the tool stocker by effectively utilizing a length in a front-rear direction of the machining machine. Therefore, according to this tool conveying device, it is possible to suppress the enlargement of the tool conveying device while increasing the number of tools that can be stored in the tool stocker.
(20) A machining system of the present invention includes a tool conveying device of any one of the above-described (1) to (19) and the machining machine.

### Effect of Invention

According to the tool conveying device of the present invention, it is possible to convey long tools with a simple structure while increasing the number of long tools that can be stored.

### Brief Description of Drawings

[FIG. 1] FIG. 1 is a perspective view showing an overall configuration of a machining system of the present embodiment.
[FIG. 2] FIG. 2 is a schematic diagram showing a structure of a machining machine of the present embodiment.
[FIG. 3] FIG. 3 is a cross-sectional view of a tool conveying device of the present embodiment as viewed from a front.
[FIG. 4] FIG. 4 is a cross-sectional view of the tool conveying device of the present embodiment as viewed from a right side.
[FIG. 5] FIG. 5 is a perspective view showing a configuration in which a tool stocker of the present embodiment is separated from the machining machine.
[FIG. 6] FIG. 6 is a view showing a tool stored in the tool stocker of the present embodiment.
[FIG. 7] FIG. 7 is a perspective view showing a first tool conveying mechanism in the tool conveying device of the present embodiment.
[FIG. 8] FIG. 8 is a view showing a lock mechanism that connects the first tool conveying mechanism and a base in the tool conveying device of the present embodiment.

### Description of Embodiment

Specific embodiments of the present invention will be described below with reference to the drawings.

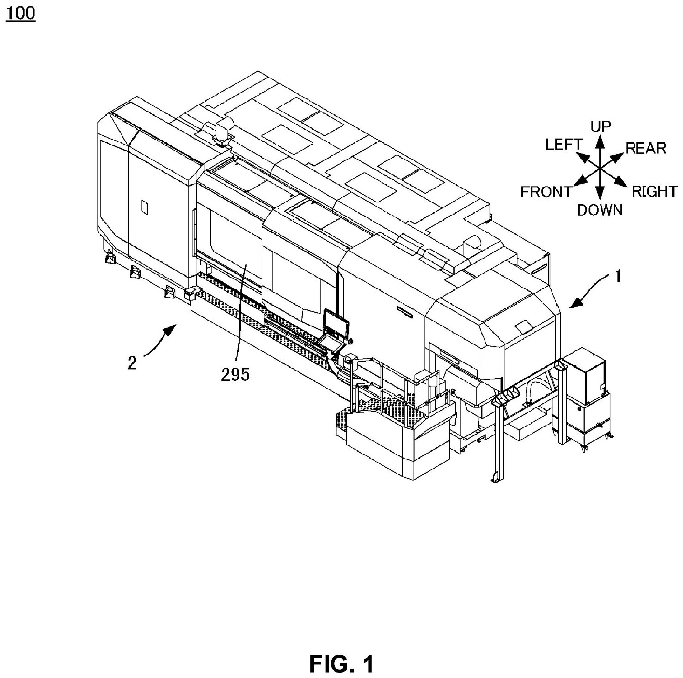

FIG. 1 is a perspective view showing the overall configuration of the machining system of the present embodiment. A machining system 100 includes a tool conveying device 1, a machining machine 2, and a control device (not shown). In the machining system 100, a tool to be used in the machining machine 2 is stored in the tool conveying device 1. The tool conveying device 1 conveys a stored tool and delivers the tool to the machining machine 2. The tool conveying device 1 conveys and stores a tool delivered from the machining machine 2. Each component will be described in detail below.

### <Configuration>

### [Machining Machine]

The machining machine 2 is a machine that machines a workpiece. The machining machine 2 is a multi-tasking machine having a turning function and a milling function. The machining machine 2 may be configured to perform not only removal machining but also additive machining, for example, and may be any type to which the tool conveying device described below can be applied.

The machining machine 2 includes a door 295 that can be opened and closed. The door 295 constitutes a part of an exterior of the machining machine 2. The door 295 opens and closes a passage between a machining chamber for machining a workpiece and an exterior of the machining machine 2. The door 295 is configured to allow loading of a workpiece into the machining chamber and unloading of a workpiece from the machining chamber. The door 295 is provided at a front of the machining machine 2. Hereinafter, a front of the machining machine 2 refers to a surface on a side of the machining machine 2 on which the door 295 is provided. A rear of the machining machine 2 refers to a surface on a side opposite to the front of the machining machine 2. In the machining machine 2, a direction from the rear to the front is referred to as a front direction, and a direction from the front to the rear is referred to as a rear direction. In the machining machine 2, a left direction refers to a direction toward a left of the machining machine 2 in a front view, and a right direction refers to a direction toward a right of the machining machine 2 in a front view. In the machining machine 2, an upward direction refers to a direction toward a top (ceiling) of the machining machine 2 in a front view, and a downward direction refers to a direction toward a bottom (floor) of the machining machine 2 in a front view.

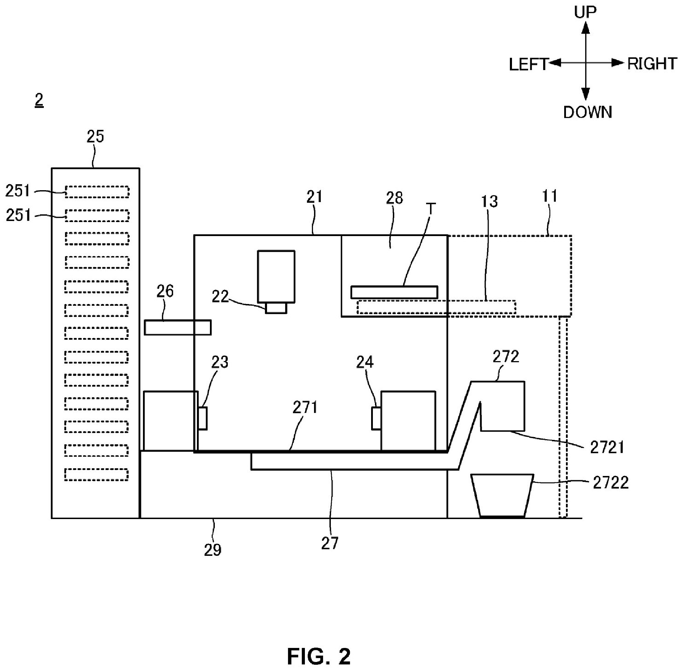

FIG. 2 is a schematic diagram showing the structure of the machining machine of the present embodiment. The machining machine 2 includes a machining chamber 21 for machining a workpiece and a spindle 22 provided in the machining chamber. The machining chamber 21 is a space for machining a workpiece. The machining chamber 21 is formed of a splash guard or the like. The spindle 22 detachably holds a tool via a tool holder. The spindle 22 is rotatably held in a spindle head (not shown). The spindle head is movably held on a column (not shown) erected at a rear end of a bed 29 of the machining machine 2 so as to be movable in an up-down direction (also referred to as an X direction) and in a front-rear direction (also referred to as a Y direction). The column is supported on an upper surface of a rear end portion of the bed so as to be movable in a left-right direction (also referred to as a Z direction). With such a configuration, the spindle 22 is movable in an up-down direction, a front-rear direction, and a left-right direction. The spindle 22 is also configured to be rotatable around a rotation axis (also referred to as a B axis) parallel to the front-rear direction.

The machining machine 2 further includes a workpiece spindle 23 and an auxiliary workpiece spindle 24. The workpiece spindle 23 and the auxiliary workpiece spindle 24 are provided in the machining chamber 21. The workpiece spindle 23 and the auxiliary workpiece spindle 24 are provided on the bed 29. The workpiece spindle 23 and the auxiliary workpiece spindle 24 each include a chuck that grips an end of a workpiece. The workpiece spindle 23 and the auxiliary workpiece spindle 24 support a workpiece such that a central axis of the workpiece is parallel to the left-right direction.

The machining machine 2 further includes a standard tool magazine 25, a standard tool changer 26, and a machining scrap conveying device 27. The standard tool magazine 25 stores a plurality of tools 251 to be attached to the spindle 22. The standard tool magazine 25 is provided in the machining machine 2. The standard tool magazine 25 is provided adjacent to the machining chamber 21. At least a part of the standard tool magazine 25 is provided on the left of the machining chamber 21. The standard tool changer 26 is a magazine-type automatic tool changer. The standard tool changer 26 is provided in the machining machine 2. The standard tool changer 26 delivers tools between the standard tool magazine 25 and the spindle 22. The machining scrap conveying device 27 conveys machining scrap generated by machining a workpiece. The machining scrap conveying device 27 conveys machining scrap generated in the machining chamber 21 to the outside of the machining machine 2. The machining scrap conveying device 27 extends from the machining chamber 21 in the left-right direction. A part of the machining scrap conveying device 27 is provided in the machining machine 2, and the rest is provided outside the machining machine 2. The machining scrap conveying device 27 includes a receiving portion 271 that receives machining scrap. The receiving portion 271 is provided below the machining chamber 21. The machining scrap conveying device 27 includes a discharge portion 272 that discharges machining scrap. The discharge portion 272 is provided outside the machining machine 2. The discharge portion 272 protrudes outward from a lower portion of a right side surface of the machining machine 2. The discharge portion 272 includes, for example, an outlet 2721. The discharge portion 272 includes, for example, a bucket 2722 that holds machining scrap discharged from the outlet.

A conveyance chamber 28 is provided in the machining machine 2. The conveyance chamber 28 is provided adjacent to a tool stocker 11. The conveyance chamber 28 is provided so as to protrude from an exterior surface (right side surface) of the machining machine 2 into the machining chamber 21. The conveyance chamber 28 is provided so as to protrude from the ceiling of the machining chamber 21 into the machining chamber 21. The conveyance chamber 28 is provided at an upper right portion of the machining machine 2. A tool T to be delivered to the spindle 22 is conveyed to the conveyance chamber 28 by a second tool conveying mechanism 13 described later.

### [Tool Conveying Device]

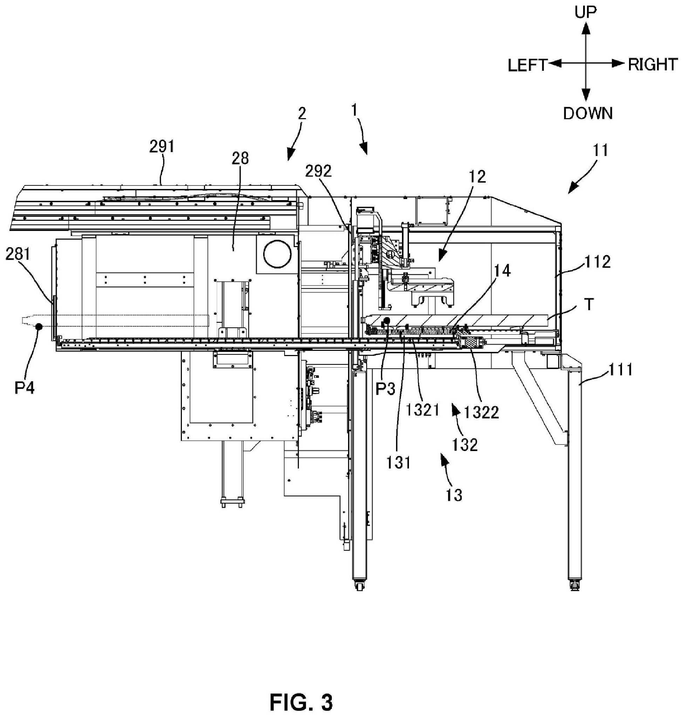

FIG. 3 is a cross-sectional view of the tool conveying device of the present embodiment as viewed from the front. This figure shows the tool conveying device 1 cut along a plane perpendicular to the front-rear direction and viewed from the front. The tool conveying device 1 includes the tool stocker 11, a first tool conveying mechanism 12, and a second tool conveying mechanism 13.

### [Tool Stocker]

The tool stocker 11 stores a plurality of tools T in a state in which the tools are placed and arranged side by side. Here, the tool T is an elongated tool called a long tool. The tool T has a size that cannot be fully accommodated in the standard tool magazine 25 of the machining machine 2. The tool T has, for example, a length dimension in a longitudinal direction that is larger than a dimension in a front-rear direction or a left-right direction of a storage portion in which the tool is stored in the standard tool magazine 25.

The tool stocker 11 is provided adjacent to the machining machine 2. More specifically, the tool stocker 11 is provided on the right of the machining machine 2. However, the tool stocker 11 may be provided on the left of the machining machine 2. The tool stocker 11 is provided so as to be connected to the machining machine 2. However, the tool stocker 11 may be provided at a predetermined distance from the machining machine 2. The predetermined distance is not particularly limited and is set as appropriate according to specifications of a product.

The tool stocker 11 includes support legs 111 and a tool housing 112. The support legs 111 are provided on a floor of a facility where the tool conveying device 1 and the machining machine 2 are installed. The support legs 111 support the tool housing 112. The support legs 111 are configured to form a space below the tool housing 112. In this manner, an equipment space is formed below the tool housing 112 with the tool housing 112 supported above by the support legs 111. As a result, the discharge portion 272 of the machining scrap conveying device 27 and the like, which are disposed on the right side of the machining machine 2, can be arranged. In other words, even if the tool conveying device 1 is added as an option to the machining machine 2, the overall footprint can be kept from changing significantly. In addition, since the tool housing 112 is arranged above the discharge portion 272, the entire width of the machining machine 2 in the front-rear direction can be utilized. Therefore, it is possible to increase the number of tools T that can be stored in the interior even when the tools are placed horizontally. The support legs 111 have, for example, a frame structure. As an example, the support legs 111 include at least four struts. Each strut supports a corner portion of a lower surface of the tool housing 112.

The tool housing 112 is provided on the support legs 111. The tool housing 112 has a substantially rectangular parallelepiped shape. The tool housing 112 forms a tool storage chamber inside that stores tools. The tool housing 112 has a front surface, a rear surface, an upper surface, a lower surface, and a right side surface, and a left side surface of the tool housing 112 is open.

The tool housing 112 is provided adjacent to an upper right portion of the machining machine 2. The tool housing 112 is connected to the right side surface of the machining machine 2. The tool housing 112 is provided adjacent to the conveyance chamber 28 formed in the machining machine 2. The tool housing 112 is provided at a predetermined height position from a lower end (floor) of the support legs 111. The tool housing 112 is provided at a position higher than the machining scrap conveying device 27 (see FIG. 2) of the machining machine 2. Below the tool housing 112, at least a part of the discharge portion 272 of the machining scrap conveying device 27 of the machining machine 2 is provided.

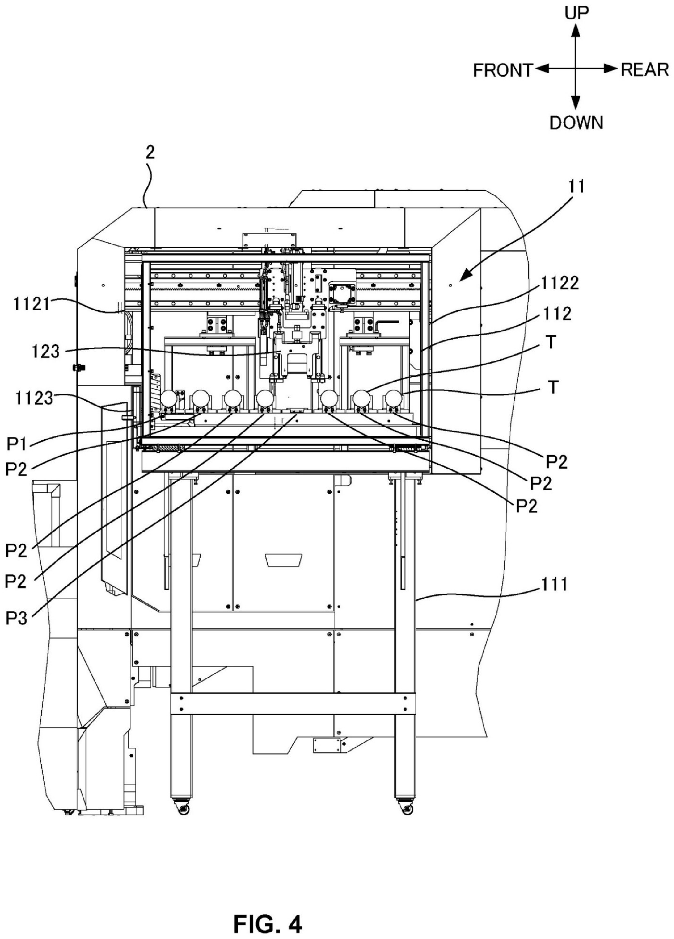

FIG. 4 is a cross-sectional view of the tool conveying device of the present embodiment as viewed from the right side. This figure shows the tool conveying device 1 cut along a plane perpendicular to the left-right direction and viewed from the right. The tool housing 112 has a front-rear direction length such that it can accommodate a plurality of tools T. The length of the tool housing 112 in the front-rear direction is longer than the length of the machining chamber 21 in the front-rear direction. The front surface 1121 of the tool housing 112 is provided in front of a center of the machining machine 2 in the left-right direction. The front surface 1121 of the tool housing 112 is provided at substantially the same position as the front door of the machining machine 2 in the front-rear direction. The rear surface 1122 of the tool housing 112 is provided behind a center of the machining machine 2 in the left-right direction. The rear surface 1122 of the tool housing 112 is provided behind the rear surface of the machining chamber 21 in the front-rear direction. However, the size of the tool housing 112 described in the present embodiment is merely an example. The size of the tool housing 112 may be appropriately changed according to the tool type to be stored, the number of tools, the tool size, and the like. A drawer 1123 is provided on the front surface 1121 of the tool housing 112. The drawer 1123 is movable in the front-rear direction. The drawer 1123 can be pulled out to a position in front of the front surface 1121 of the tool housing 112. The drawer 1123 can house a tool T inserted from an exterior of the tool stocker 11. Here, the exterior of the tool stocker 11 refers to an exterior of the machining system 100. The exterior of the tool stocker 11 does not refer to the machining machine 2.

Each of the plurality of tools T is arranged so that a longitudinal direction thereof is parallel to the left-right direction. The plurality of tools T are arranged side by side. The plurality of tools T are stored in a state of being arranged in a direction orthogonal to a longitudinal direction of each tool. The plurality of tools T are arranged and stored in the front-rear direction.

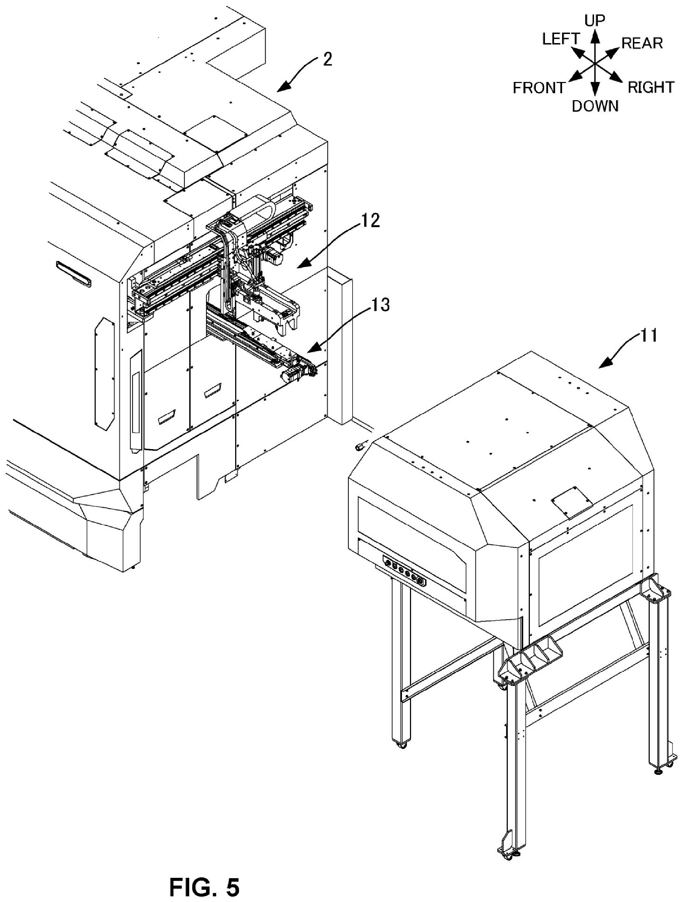

FIG. 5 is a perspective view showing a configuration in which the tool stocker of the present embodiment is separated from the machining machine. The tool stocker 11 is configured to be separable from the machining machine 2, the first tool conveying mechanism 12, and the second tool conveying mechanism 13.

### [Base]

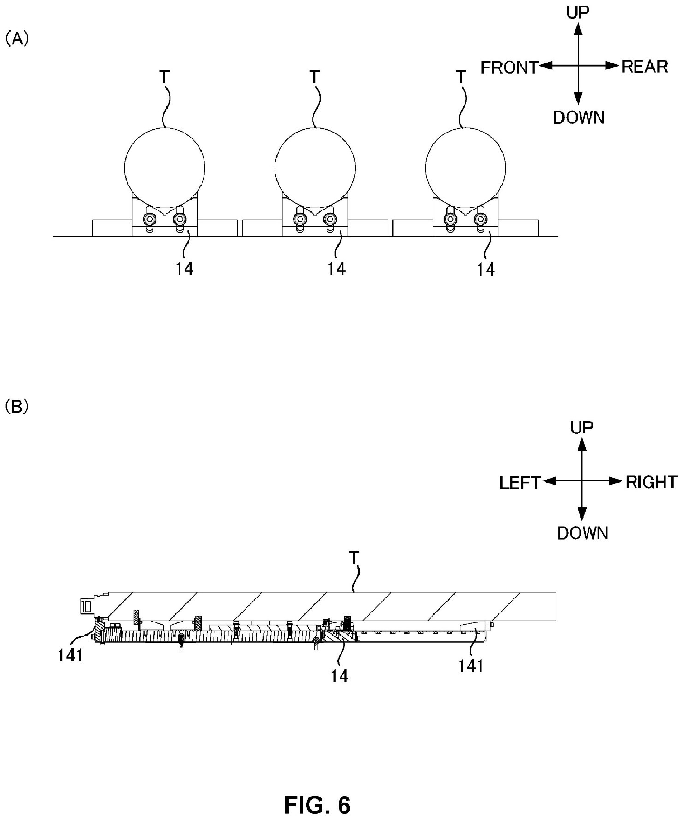

FIG. 6 is a view showing a tool stored in the tool stocker of the present embodiment. In the figure, (A) is a view of the tool T as viewed from the right side. To store tools in the tool stocker 11, the tool conveying device 1 includes a plurality of bases 14. Since the plurality of bases 14 have the same configuration, one base will be described below. The base 14 has a plate shape with a longitudinal direction in the left-right direction. The base 14 is configured to support the tool T on an upper surface side. The method of supporting the tool by the base 14 is not particularly limited. For example, as shown in (B), the base 14 includes a plurality of holders 141 that support the tool T. At least two holders 141 are arranged along a longitudinal direction on the tool placing surface side of the base 14. The holders 141 have, for example, a substantially V-block shape and are configured to be attachable to and detachable from the base 14. A first holder supports a first end of the tool. A second holder supports a second end of the tool. For example, a longitudinal position of the holder 141 on an upper surface of the base 14 is configured to be appropriately changeable according to a weight and a length of the tool. The plurality of holders 141 are configured such that a position, a size, a shape, and the like can be appropriately changed according to the tool being supported. Further, in the present embodiment, an upper surface side of the base 14 is connected to the first tool conveying mechanism 12 described later, and a lower surface side of the base 14 is connected to the second tool conveying mechanism 13 described later.

### [First Tool Conveying Mechanism]

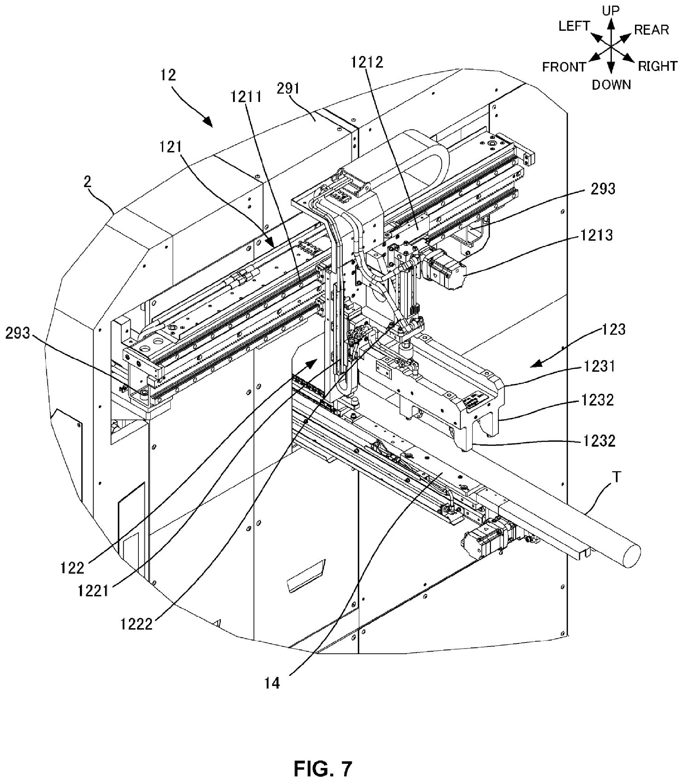

FIG. 7 is a perspective view showing a first tool conveying mechanism in the tool conveying device of the present embodiment. The first tool conveying mechanism 12 is configured to convey a tool in the front-rear direction of the machining machine 2 within the tool housing 112. The first tool conveying mechanism 12 is provided at an upper right portion of the machining machine 2. The first tool conveying mechanism 12 is provided such that at least a part of the first tool conveying mechanism 12 protrudes from the machining machine 2. The first tool conveying mechanism 12 is provided such that at least a part of the first tool conveying mechanism 12 protrudes from the machining machine 2 in the left-right direction. The first tool conveying mechanism 12 is provided at a position lower than a ceiling 291 of the machining machine 2. The first tool conveying mechanism 12 can move the tool T in the up-down direction and the front-rear direction. More specifically, the first tool conveying mechanism 12 includes a front-rear movement mechanism 121, an up-down movement mechanism 122, and a conveying arm 123.

The front-rear movement mechanism 121 moves the conveying arm 123 in the front-rear direction. The front-rear movement mechanism 121 is, for example, a slider. However, the front-rear movement mechanism 121 is not limited to a slider. The front-rear movement mechanism 121 may be configured to move the conveying arm 123 in the front-rear direction. The front-rear movement mechanism 121 includes a guide rail 1211, a slide table 1212, and a drive device 1213. The guide rail 1211 is provided at an upper right portion of the machining machine 2. The guide rail 1211 extends in the front-rear direction. In the front-rear direction, both end portions of the guide rail 1211 are fixed to the machining machine 2 via a first fixing portion 293. The first fixing portion 293, for example, utilizes or is fixed to a frame or the like that supports each device of the machining machine 2, a splash guard, or the like. Accordingly, by fixing the guide rail 1211 to the first fixing portion 293, the guide rail 1211 is configured to be positioned relative to each device of the machining machine 2. As described later, the second tool conveying mechanism 13 is also fixed to the machining machine 2 side instead of the tool stocker. In this manner, each conveying mechanism pertaining to conveyance of the tool T is fixed to the machining machine 2, so even when the tool stocker 11 for a long tool is added as an option to the machining machine 2, positions of respective devices can be easily adjusted. In other words, a portion that is stationary as a function of the tool conveying device 1 is consolidated in the tool housing 112, and a portion that is movable and requires alignment is fixed to the machining machine 2. Therefore, the tool conveying device 1 can be assembled by simply covering, with the tool housing 112, a portion exposed from the machining machine 2 to an exterior in each conveying mechanism after alignment is completed. Therefore, the tool conveying device can be easily added as an optional function. The slide table 1212 is slidably attached along the guide rail 1211. The slide table 1212 has a plate shape. The slide table 1212 extends below the guide rail. The slide table 1212 moves in the front-rear direction along the guide rail 1211. The slide table 1212 is moved by the drive device 1213. The drive device 1213 is, for example, a servo motor. However, the drive device 1213 is not limited to this. The drive device 1213 only needs to be capable of moving the slide table 1212. The drive device 1213 may be various motors such as a linear motor, a hydraulic device, a pneumatic device, or other actuators.

The up-down movement mechanism 122 moves the conveying arm 123 in the up-down direction. The up-down movement mechanism 122 includes a guide rail 1221 and a lifting device 1222. The guide rail 1221 is attached to the slide table 1212 of the front-rear movement mechanism 121. The guide rail 1221 extends in the up-down direction. The lifting device 1222 is attached to the slide table 1212 of the front-rear movement mechanism 121. The lifting device 1222 is a hydraulic device. However, the lifting device 1222 is not limited to this. The lifting device 1222 only needs to be capable of moving the conveying arm 123 in the up-down direction. The lifting device 1222 may be various motors, sliders, pneumatic devices, or other actuators.

The conveying arm 123 is movably attached to the guide rail 1221 of the up-down movement mechanism 122. The conveying arm 123 includes an arm portion 1231 and a plurality of claw portions 1232. The arm portion 1231 extends in the left-right direction. The left end portion of the arm portion 1231 is movably attached to the guide rail 1221. The upper portion of the arm portion 1231 is attached to the lifting device 1222. The plurality of claw portions 1232 are provided at a lower portion of the arm portion 1231. The plurality of claw portions 1232 extend downward from the arm portion 1231. In the present embodiment, four claw portions 1232 are provided. Two claw portions 1232 are provided at a distal end portion (right end portion) of the arm portion 1231 with a predetermined interval in the front-rear direction. The remaining two claw portions 1232 are provided at positions separated by a predetermined distance from the distal end portion of the arm portion 1231 in the left-right direction. The remaining two claw portions 1232 are also provided at predetermined intervals in the front-rear direction. The interval between the two claw portions 1232 adjacent in the front-rear direction is greater than a diameter of the tool T. The plurality of claw portions 1232 are provided to straddle the tool T. However, the plurality of claw portions 1232 are not in contact with the tool T. The plurality of claw portions 1232 are configured to be attachable to and detachable from the base 14 via a lock mechanism 15. The plurality of claw portions 1232 are connected so as to be inserted into the base 14 via the lock mechanism 15.

### [Lock Mechanism]

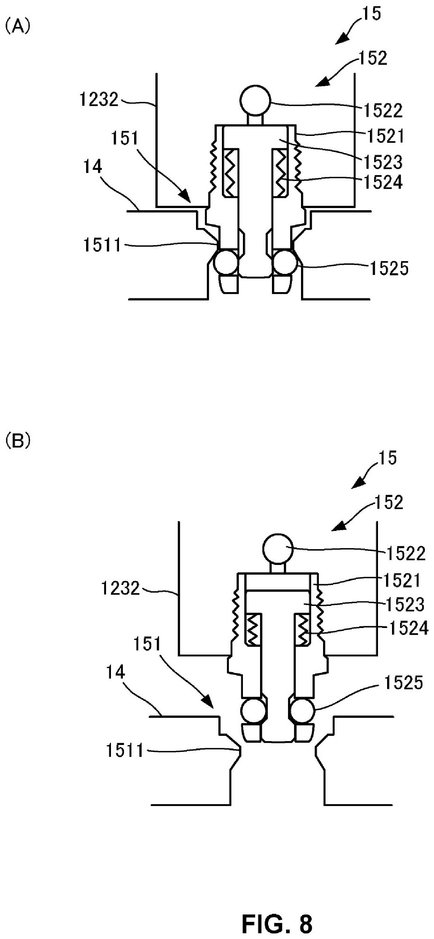

FIG. 8 is a view showing a lock mechanism that connects the first tool conveying mechanism and a base in the tool conveying device of the present embodiment. Referring to (A) in the figure, the lock mechanism 15 detachably connects the base 14 and the first tool conveying mechanism 12 (the claw portion 1232). The lock mechanism 15 is, for example, a catch cylinder. That is, the lock mechanism 15 is provided between the claw portion 1232 of the first tool conveying mechanism 12 and an upper surface of the base, and includes a recessed portion 151 and a protruding portion 152. Note that in this embodiment, the recessed portion 151 is provided on an upper surface side of the base 14, and the protruding portion 152 is provided on the claw portion 1232.

The recessed portion 151 is provided in the base 14. The recessed portion 151 has a hole shape. The recessed portion 151 opens on an upper surface of the base 14. The recessed portion 151 includes a reduced-diameter portion 1511 on an inner circumferential surface thereof.

The protruding portion 152 is provided at the lower end portion of the claw portion 1232. The protruding portion 152 protrudes downward from the lower end portion of the claw portion 1232. The protruding portion 152 includes a cylinder 1521, a pressure device 1522, a piston 1523, an elastic member 1524, and a plurality of balls 1525. The upper end portion of the cylinder 1521 is fixed to the claw portion 1232. The upper end portion of the cylinder 1521 is connected to the pressure device 1522. The pressure device 1522 is a pneumatic device, an electric actuator, or the like. The lower end portion of the cylinder 1521 is configured to be insertable into the recessed portion 151. The plurality of balls 1525 are provided at the lower end portion of the cylinder 1521. The plurality of balls 1525 are provided to be able to protrude from an outer circumferential surface of the cylinder 1521. The piston 1523 is provided inside the cylinder 1521. The piston 1523 is configured to be movable along an axial direction of the cylinder 1521. The piston 1523 is connected to the elastic member 1524 provided in the cylinder 1521. The elastic member 1524 is, for example, a spring. A rod portion of the piston 1523 is configured such that a part thereof has a reduced diameter.

Referring to (B) in the figure, when connecting the claw portion 1232 and the base 14, that is, when inserting the protruding portion 152 of the lock mechanism 15 into the recessed portion 151, the pressure device 1522 operates. The pressure device 1522 pushes the piston 1523 in the cylinder 1521 downward. As a result, a reduced-diameter portion of the piston is positioned inside the plurality of balls 1525. The plurality of balls 1525 become movable inward and can be retracted inward from an outer circumferential surface of the cylinder 1521. As a result, the protruding portion 152 is inserted into the recessed portion 151. When the protruding portion 152 is inserted into the recessed portion 151, the pressure device 1522 becomes inactive, and the piston 1523 is pushed up by the elastic member 1524. As a result, as shown in (A), the plurality of balls 1525 are pushed outward and protrude from the outer circumferential surface of the cylinder 1521. The protruding portions of the plurality of balls 1525 are restricted in upward movement by the reduced-diameter portion 1511 of the recessed portion 151. This allows the first tool conveying mechanism 12 to move the tool T by moving the base 14 via the lock mechanism 15.

Referring to FIG. 4, the first tool conveying mechanism 12 moves the tool T to a set position P1, a stock position P2, and a conveyance standby position P3. The first tool conveying mechanism 12 is configured to convey the tool T between the set position P1 and the stock position P2. The first tool conveying mechanism 12 is configured to convey the tool T between the stock position P2 and the conveyance standby position P3. The first tool conveying mechanism 12 may be configured to convey the tool T between the set position P1 and the conveyance standby position P3.

### [Set Position]

The set position P1 is a position where the tool T inserted into the tool stocker 11 from an exterior of the tool stocker 11 is placed. The set position P1 is provided in the tool stocker 11 (the tool housing 112). The set position P1 is provided so as to be aligned in the front-rear direction with the stock position P2 and the conveyance standby position P3. More specifically, the arrangement interval in the front-rear direction of the set position P1, the stock position P2, and the conveyance standby position P3 is set to be constant. When the base 14 on which the tool T is placed is set at each position, long sides of the base 14 become adjacent to each other with almost no gaps. Here, "with almost no gaps" means that only a gap smaller than a width dimension of the claw portion 1232 of the first tool conveying mechanism 12 is present. The set position P1 is provided in front of the stock position P2 and the conveyance standby position P3. The set position P1 is set on the drawer 1123 in a state in which the drawer 1123 is pushed into the tool housing 112 of the tool stocker 11. The tool T is placed at the set position P1 via a base 14. More specifically, the worker sets the base 14 on which the tool T is placed on the drawer 1123 in a state in which the drawer 1123 is pulled forward from the tool housing 112. Here, the drawer 1123 is configured such that the tool T on the base 14 is arranged at the set position P1 by the worker pushing the drawer 1123 into the tool housing 112 after the drawer 1123 is set.

### [Stock Position]

The stock position P2 is a position where the tool T stored in the tool stocker 11 is placed. Since the tool stocker 11 can store a plurality of tools, a plurality of stock positions P2 are provided. More specifically, the tool T arranged at the stock position P2 is a tool that is not used in a current machining step or a next machining step and that is in standby. Each stock position P2 is provided in the tool stocker 11 (the tool housing 112). The stock position P2 are provided in alignment in the front-rear direction. The distance in the front-rear direction between the frontmost stock position P2 and the rearmost stock position P2 is longer than the distance in the front-rear direction of the machining chamber 21 (the distance between an inner surface of a door that forms a front surface of the machining chamber 21 and a wall surface that forms a rear surface of the machining chamber 21). A base 14 can be placed at each stock position P2. At each stock position P2, a tool T is placed via a base 14.

### [Conveyance Standby Position]

The conveyance standby position P3 is a position where a tool T to be attached to and detached from the spindle 22 is placed. That is, the conveyance standby position P3 is a position where the tool T to be attached to the spindle 22 is placed and a position where the tool T that is detached from the spindle 22 and is to be stored in the tool stocker 11 is placed. In the present embodiment, the conveyance standby position P3 is a position where the tool T detached from the spindle 22 is temporarily placed until the tool T is conveyed by the first tool conveying mechanism 12 to the stock position P2. Further, the conveyance standby position P3 is also a position where the tool T is temporarily placed until the tool T at the stock position P2 is conveyed to the spindle 22. After the tool T detached from the spindle 22 is conveyed to the conveyance standby position P3, the tool T is placed at the stock position P2. The conveyance standby position P3 is provided in the tool stocker 11 (the tool housing 112). However, the conveyance standby position P3 may be provided in the conveyance chamber 28 formed in the machining machine 2. One conveyance standby position P3 is provided. The conveyance standby position P3 is provided at a position offset from each stock position P2 in a direction in which the tools T stored in the tool stocker 11 are aligned (a front-rear direction). The conveyance standby position P3 is provided in the middle of the plurality of stock positions P2 arranged in the front-rear direction. The conveyance standby position P3 is provided in front of at least one stock position P2. The conveyance standby position P3 is provided behind at least one stock position P2. The conveyance standby position P3 is provided between two adjacent stock positions P2 in the front-rear direction. The conveyance standby position P3 is provided at a center of the tool housing 112 in the front-rear direction. However, a position where the conveyance standby position P3 is provided is not particularly limited. The conveyance standby position P3 only needs to be a position different from a stock position P2. The conveyance standby position P3 is provided at a part of the second tool conveying mechanism 13. The conveyance standby position P3 corresponds to an end portion (the right end portion) on a tool stocker 11 side of the second tool conveying mechanism 13 extending in the left-right direction.

### [Second Tool Conveying Mechanism]

Referring to FIG. 3, the second tool conveying mechanism 13 is a conveyor. The second tool conveying mechanism 13 includes a conveying platform 131 and a left-right movement mechanism 132. As shown in FIG. 5, the second tool conveying mechanism 13 is provided below the first tool conveying mechanism 12 and is configured such that its conveyance direction intersects the conveyance direction of the first tool conveying mechanism 12 at 90 degrees in a skew position. The second tool conveying mechanism 13 mainly conveys a tool T between the conveyance standby position P3 of the tool stocker 11 and the tool exchange position P4 where a tool exchange is performed with the tool spindle 22. The first tool conveying mechanism 12 is connected to an upper surface side of the base 14 to convey the tool T, while the second tool conveying mechanism 13 is connected to a lower surface side of the base 14 to convey the tool T.

The conveying platform 131 has a plate shape. The conveying platform 131 is configured to allow a base 14 to be placed thereon. The conveying platform 131 supports the base 14 placed thereon. The conveying platform 131 is configured so that the base 14 placed thereon can be detached from the conveying platform 131. The conveying platform 131 includes a restriction mechanism that restricts movement of the base 14 relative to the conveying platform 131. The restriction mechanism is, for example, a positioning pin or the like. The conveying platform 131 is attached to the left-right movement mechanism 132.

The left-right movement mechanism 132 moves the conveying platform 131 in the left-right direction. The left-right movement mechanism 132 extends in the left-right direction. The left-right movement mechanism 132 is fixed to the machining machine 2 via a second fixing portion (not shown). The second fixing portion is also fixed to a frame or the like that supports each device of the machining machine 2, and the left-right movement mechanism 132 is positioned relative to each device of the machining machine 2 by being fixed to the second fixing portion. The left-right movement mechanism 132 includes a transmission device 1321 and a drive device 1322. The transmission device 1321 extends in the left-right direction. The transmission device 1321 supports the conveying platform 131. The transmission device 1321 is a chain, a belt, or the like. The drive device 1322 drives the transmission device 1321. The drive device 1322 is, for example, a servo motor. The drive device 1322 is not limited to a servo motor and only needs to be capable of moving the conveying platform 131. Further, the left-right movement mechanism 132 is not limited to such a configuration. The left-right movement mechanism 132 only needs to be capable of moving the conveying platform 131. The left-right movement mechanism 132 may be a variety of actuators, pneumatic devices, hydraulic devices, or the like. The left-right movement mechanism 132 moves the conveying platform 131 between a right-side end on a conveyance standby position P3 side and a left-side end on a tool exchange position P4 side. The conveying platform 131 is configured such that when it is arranged at the right-side end, the tool T on the base 14 attached to an upper portion of the conveying platform 131 is arranged at the conveyance standby position P3 and upper surfaces of a plurality of bases 14 placed in the tool stocker 11 are substantially flush with one another.

At least a part of the second tool conveying mechanism 13 having such a configuration is provided in the machining machine 2. At least a part of the second tool conveying mechanism 13 is provided at an upper right portion of the machining machine 2. The second tool conveying mechanism 13 is provided not to protrude from the conveyance chamber 28 of the machining machine 2 into the machining chamber 21. The second tool conveying mechanism 13 is provided such that a part thereof protrudes from the machining machine 2 toward the tool stocker 11. The second tool conveying mechanism 13 is provided such that a part thereof protrudes from a right side surface 292 of the machining machine 2. The second tool conveying mechanism 13 is provided to penetrate a right side surface 292 of the machining machine 2. The second tool conveying mechanism 13 passes through an opening provided at a right side surface 292 of the machining machine 2 and protrudes to a right side of the machining machine 2.

The second tool conveying mechanism 13 is provided at a position lower than a ceiling 291 of the machining machine 2. A part of the second tool conveying mechanism 13 is provided in the tool stocker 11. A right end portion of the second tool conveying mechanism 13 is provided in the tool stocker 11. A left end portion of the second tool conveying mechanism 13 is provided in the machining machine 2. The left end portion of the second tool conveying mechanism 13 is provided in the conveyance chamber 28 of the machining machine 2. The left end portion of the second tool conveying mechanism 13 is provided on a right side of a shutter 281 that separates the machining chamber and the conveyance chamber. The second tool conveying mechanism 13 is configured such that, when the tool T is positioned at the tool exchange position P4, at least a part of the tool T protrudes into the machining chamber 21. The second tool conveying mechanism 13 is configured such that a distal end portion (the left end portion) of the tool T protrudes into the machining chamber 21. A proximal end portion of the tool T is attached to the spindle 22. The tool exchange position P4 may be provided in the conveyance chamber 28, and the proximal end portion of the tool T may not be exposed in the machining chamber 21 while the tool T is arranged at the tool exchange position P4. For example, a distal end portion of the spindle 22 may enter the conveyance chamber 28 so that attachment and detachment of the proximal end portion of the tool T are performed.

### [Tool Exchange Position]

The tool exchange position P4 is a position where a tool T is attached to and detached from the spindle 22. The tool exchange position P4 is provided in the machining chamber 21. The tool exchange position P4 is provided at a position offset from the conveyance standby position P3 in a longitudinal direction of the tool T stored in the tool stocker 11 (the left-right direction). In other words, the second tool conveying mechanism 13 moves the tool T to the conveyance standby position P3 and to the tool exchange position P4, which is offset in the horizontal direction with respect to the conveyance standby position P3. The second tool conveying mechanism 13 is configured to convey the tool T between the conveyance standby position P3 and the tool exchange position P4 via the conveyance chamber 28 formed in the machining machine 2. In other words, the second tool conveying mechanism 13 is configured to reciprocate the tool T between the conveyance standby position P3 and the tool exchange position P4.

### [Control Device]

A control device (not shown) controls operations of the first tool conveying mechanism 12 and the second tool conveying mechanism 13. The control device may control an operation of the machining machine 2. The control device is configured by a computer including a CPU, a RAM, a ROM, and the like. The control device controls the operation of each component of the machining system 100 by executing a computer program stored in a recording medium.

### <Operation>

Next, an operation of the machining system 100 will be described. First, a case will be described in which the tool conveying device 1 moves a tool T from the set position P1 to the stock position P2.

Referring to FIG. 4, an operator first opens the drawer 1123 of the tool stocker 11 and inserts the tool T into the drawer. The operator then closes the drawer 1123 with the tool inserted therein. Thereby, the tool T is arranged at the set position P1. The operator then operates an operation panel. An input indicating that the tool has been stored in the drawer 1123 is made to the operation panel. Note that the arrangement of the tool at the set position P1 may be performed by a human hand or by a machine.

The control device then controls the first tool conveying mechanism 12 based on the input from the operation panel. The first tool conveying mechanism 12 moves the tool T placed at the set position P1 to the stock position P2. More specifically, the conveying arm 123 of the first tool conveying mechanism 12 is standing by at an initial position. The initial position is not particularly limited. The initial position is, for example, above the conveyance standby position P3. The conveying arm 123 then moves in a front-rear direction based on instructions from the control device. The conveying arm 123 stops above the set position P1. The conveying arm 123 is then lowered and connected to the base arranged at the set position P1. The conveying arm 123 then rises while holding the base supporting the tool T and stops at a predetermined height. Next, the conveying arm 123 moves in the front-rear direction and the up-down direction, and places the base at the predetermined stock position P2. Thereby, the tool T is moved from the set position P1 to the stock position P2.

Next, a case will be described in which the tool conveying device 1 delivers the tool T stored in the tool stocker 11 to the spindle of the machining machine 2, that is, moves the tool T from the stock position P2 to the tool exchange position P4 via the conveyance standby position P3.

First, the operator inputs to the operation panel an instruction to attach the tool T to the spindle of the machining machine. The control device controls the first tool conveying mechanism 12 based on an input from the operation panel. The first tool conveying mechanism 12 moves appropriately in the up-down direction and the front-rear direction based on instructions from the control device. The first tool conveying mechanism 12 moves the tool T placed at the stock position P2 to the conveyance standby position P3.

Referring to FIG. 3, after the tool T is placed at the conveyance standby position P3, the control device controls the second tool conveying mechanism 13. The second tool conveying mechanism 13 moves in the left-right direction based on instructions from the control device. The second tool conveying mechanism 13 moves the tool T positioned at the conveyance standby position P3 to the tool exchange position P4. The control device opens the shutter 281 of the conveyance chamber 28 before the tool T reaches the tool exchange position P4.

The control device then controls the spindle 22 of the machining machine 2. The spindle 22 moves as appropriate in the up-down direction, the left-right direction, and the front-rear direction based on instructions from the control device. The spindle 22 also pivots as appropriate around an axis (B axis) parallel to the front-rear direction based on instructions from the control device. The spindle 22 holds the tool positioned at the tool exchange position P4 based on instructions from the control device.

By operating the machining system 100 in this manner, the tool T stored in the tool stocker 11 is attached to the spindle 22. When the tool T attached to the spindle 22 is detached and stored in the tool stocker 11, the above-described operation is performed in reverse.

As described above, in the tool conveying device 1 of the present embodiment, the tool stocker 11 that stores the tool T is provided outside the machining machine 2. Therefore, the tool stocker 11 can store more tools T of various sizes and shapes than the tool stocker provided inside the machining machine. Further, in the tool conveying device 1, a conveying mechanism that delivers a tool T to the spindle 22 of the machining machine 2 is consolidated into a single conveying mechanism, the second tool conveying mechanism 13. Therefore, according to the tool conveying device 1, it is possible to convey the tool T (long tool) with a simple structure while increasing the number of long tools that can be stored.

In the tool conveying device 1, a plurality of claw portions 1232 in the first tool conveying mechanism 12 are connected to the base 14 by being inserted from above by the lock mechanism 15. The plurality of claw portions 1232 are disconnected from the base 14 by being pulled upward by the lock mechanism 15. With such a configuration, the gap for allowing the claw portions to enter between the bases 14 can be minimized and/or substantially eliminated compared to a configuration in which the bases are pinched by claw portions in a hand having a configuration in which the claw portions move toward and away from each other. Therefore, according to the tool conveying device 1, the space in the tool stocker 11 can be maximally and effectively utilized.

Further, in the tool conveying device 1, the first tool conveying mechanism 12 and the second tool conveying mechanism 13 for conveying the tool T are fixed to the machining machine 2 instead of the tool stocker 11. Therefore, the positional relationship between the devices of the machining machine 2 and the first and second tool conveying mechanisms 12 and 13 can be easily adjusted. Therefore, according to the tool conveying device 1, it is easy to additionally provide the tool stocker 11 as an optional function.

The above description of the embodiments is illustrative in all respects and is not intended to be limiting. Modifications and variations can be made as appropriate by a person skilled in the art. The scope of the present invention is indicated by the claims, not by the embodiments described above. Further, the scope of the present invention includes modifications of the embodiments that fall within the scope of the patent claims and the equivalents thereof.

For example, in the above embodiment, a case in which the first tool conveying mechanism 12 moves a tool provided at the set position P1 has been described. However, in the tool conveying device 1, the set position P1 may not be provided. In this case, the tool attached to the spindle 22 of the machining machine 2 may be moved to the tool stocker 11 by the second tool conveying mechanism 13 and the first tool conveying mechanism 12 and may be placed at the stock position.

Further, in the above-described embodiments, a case in which the conveyance standby position P3 is provided in the tool stocker 11 has been described. However, the conveyance standby position P3 may be provided in the conveyance chamber 28 formed in the machining machine 2. In this case, the first tool conveying mechanism 12 moves the tool placed at the stock position P2 in the tool stocker 11 to the conveyance standby position P3 in the conveyance chamber 28 of the machining machine 2. The same can be applied to the tool exchange position P4. In other words, in the above-described embodiments, a case in which the tool exchange position P4 is provided in the machining chamber 21 has been described. However, the tool exchange position P4 may be provided in the conveyance chamber 28. In this case, the conveyance chamber 28 is configured such that at least a part of the spindle 22 can enter the conveyance chamber 28. Attachment and detachment of the tool T to and from the spindle 22 are performed in the conveyance chamber 28.

In addition, in the above-described embodiment, a case in which the lock mechanism 15 connects the first tool conveying mechanism 12 and the base 14 has been described. However, the connection between the first tool conveying mechanism 12 and the base 14 is not limited to the lock mechanism 15. The connection between the first tool conveying mechanism 12 and the base 14 may be performed, for example, with a hand having claw portions capable of moving toward and away from each other. Further, the first tool conveying mechanism 12 may directly grip the tool.

### List of Reference Signs

- 100:: Machining System
- 1:: Tool Conveying Device
- 2:: Machining Machine
- 11:: Tool Stocker
- 111:: Support Leg
- 112:: Tool Housing
- 12:: First Tool Conveying Mechanism
- 121:: Front-Rear Movement Mechanism
- 122:: Up-Down Movement Mechanism
- 123:: Conveying Arm
- 13:: Second Tool Conveying Mechanism
- 131:: Conveying Platform
- 132:: Left-Right Movement Mechanism
- 14:: Base
- 15:: Lock Mechanism
- 151:: Recessed Portion
- 152:: Protruding Portion
- 21:: Machining Chamber
- 22:: Spindle
- 23:: Workpiece Spindle
- 24:: Auxiliary Workpiece Spindle
- 25:: Standard Tool Magazine
- 26:: Standard Tool Changer
- 27:: Machining Scrap Conveying Device
- 28:: Conveyance Chamber
- 291:: Ceiling of Machining Machine
- 292:: Right Side Surface of Machining Machine
- 293:: Fixing Portion
- P1:: Set Position
- P2:: Stock Position
- P3:: Conveyance Standby Position
- P4:: Tool Exchange Position
- T:: Tool (Long Tool)

## Claims

1. A tool conveying device used in a machining machine, the machining machine including:
a machining chamber for machining a workpiece; and a spindle provided in the machining chamber and configured to detachably hold a tool,
the tool conveying device comprising:
a tool stocker provided adjacent to the machining machine and configured to store a plurality of tools in a state in which the tools are placed and arranged side by side;
a first tool conveying mechanism configured to move a tool to a plurality of stock positions at which tools stored in the tool stocker are respectively placed and to a conveyance standby position at which a tool to be attached to or detached from the spindle is placed; and
a second tool conveying mechanism configured to move a tool to the conveyance standby position and to a tool exchange position that is offset in a horizontal direction with respect to the conveyance standby position and at which the tool is delivered to the spindle, wherein
the second tool conveying mechanism is configured to convey a tool between the conveyance standby position and the tool exchange position via a conveyance chamber formed in the machining machine, and
the first tool conveying mechanism is configured to
move a tool to the plurality of stock positions and to the conveyance standby position that is offset from each of the plurality of stock positions in a front-rear direction of the machining machine.

2. The tool conveying device of claim 1, wherein
the tool stocker is configured to
store the plurality of tools arranged side by side in a direction orthogonal to a longitudinal direction thereof.

3. The tool conveying device of claim 1, wherein
the tool stocker is configured to
store the plurality of tools arranged in the front-rear direction of the machining machine such that a longitudinal direction of each of the tools is parallel to a left-right direction of the machining machine.

4. The tool conveying device of claim 1, wherein
the first tool conveying mechanism is configured to
move a tool to the plurality of stock positions and to the conveyance standby position that is offset from each of the plurality of stock positions in a direction in which tools stored in the tool stocker are arranged.

5. The tool conveying device of claim 1, wherein
the second tool conveying mechanism is configured to
move a tool to the conveyance standby position and to the tool exchange position that is offset from the conveyance standby position in a longitudinal direction of a tool stored in the tool stocker.

6. The tool conveying device of claim 1, wherein
the second tool conveying mechanism is configured to
move a tool to the conveyance standby position and to the tool exchange position that is offset from the conveyance standby position in a left-right direction of the machining machine.

7. The tool conveying device of claim 1, wherein
a direction in which the first tool conveying mechanism moves a tool intersects a direction in which the second tool conveying mechanism moves a tool.

8. The tool conveying device of claim 1, wherein
the first tool conveying mechanism and the second tool conveying mechanism are provided at positions lower than a ceiling of the machining machine.

9. The tool conveying device of claim 1, wherein
the tool conveying device further comprises:
a plurality of bases on which the plurality of tools are respectively placed; and
a lock mechanism that detachably connects each of the plurality of bases and the first tool conveying mechanism.

10. The tool conveying device of claim 1, wherein
the tool conveying device further comprises
a plurality of bases on which the plurality of tools are respectively placed, wherein
the first tool conveying mechanism is connected to the base from a side where a tool is placed on the base and is configured to move the tool by moving the base.

11. The tool conveying device of claim 1, wherein
the tool conveying device further comprises
a plurality of bases on which the plurality of tools are respectively placed, and
the second tool conveying mechanism is connected to the base from a side opposite to a side where a tool is placed on the base and is configured to move the tool by moving the base.

12. The tool conveying device of claim 1, wherein
the first tool conveying mechanism is configured to
move a tool to a set position at which the tool is loaded into and unloaded from the tool stocker, in addition to the stock positions and the conveyance standby position.

13. The tool conveying device of claim 1, wherein
the machining machine includes:
a first fixing portion configured to fix the first tool conveying mechanism; and
a second fixing portion configured to fix the second tool conveying mechanism, and
the machining machine, the first tool conveying mechanism, and the second tool conveying mechanism are configured to be separable from the tool stocker by fixing the first tool conveying mechanism and the second tool conveying mechanism to the machining machine with the first fixing portion and the second fixing portion.

14. The tool conveying device of claim 1, wherein
the tool stocker is provided adjacent to a side surface of the machining machine, and
when the machining machine is bisected into upper and lower portions at a middle of a height thereof, in a side view, an area in which the tool stocker overlaps the upper portion of the machining machine is larger than an area in which the tool stocker overlaps the lower portion of the machining machine.

15. The tool conveying device of claim 1, wherein
the tool stocker includes:
a tool housing configured to store the plurality of tools; and
support legs configured to support the tool housing, and
the support legs are configured to
form a space under the tool housing.

16. The tool conveying device of claim 15, wherein
the machining machine further includes
a machining scrap conveying device configured to convey machining scrap generated by machining the workpiece, and
the machining scrap conveying device includes
a discharge portion provided in the space under the tool housing and configured to discharge the machining scrap from the machining machine.

17. The tool conveying device of claim 1, wherein
the plurality of stock positions are arranged in the front-rear direction of the machining machine, and
a distance in the front-rear direction between a frontmost stock position and a rearmost stock position is longer than a distance in a front-rear direction of the machining chamber.

18. The tool conveying device of claim 1, wherein
the plurality of stock positions are arranged in the front-rear direction of the machining machine, and
the conveyance standby position is provided forward of at least one stock position and rearward of at least one stock position.

19. A machining system comprising the tool conveying device of any one of claims 1 to 18 and the machining machine.
